# EUROPÄISCHE PATENTSCHRIFT

(11) **EP 2 321 158 B1**
(45) Veröffentlichungstag und Bekanntmachung des Hinweises auf die Patenterteilung: **12.09.2018**
(21) Anmeldenummer: 09781376.0
(22) Anmeldetag: 31.07.2009
(51) Int. Cl.: B60S 1/08, H02P 29/00, H02P 7/00, H02P 21/14

(54) **VORRICHTUNG UND VERFAHREN ZUR STEUERUNG EINES ELEKTROMOTORS**
METHOD AND APPARATUS FOR CONTROLLING AN ELECTRIC MOTOR
PROCEDE ET DISPOSITIF DE COMMANDE POUR MOTEUR ELECTRIQUE

(30) Priorität: 09.09.2008 DE 102008041893
(43) Veröffentlichungstag der Anmeldung: 18.05.2011
(73) Patentinhaber: Robert Bosch GmbH, 70442 Stuttgart (DE)
(72) Erfinder: ZIMMER, Joachim, 77880 Sasbach (DE)
(86) Internationale Anmeldenummer: PCT/EP2009/059977
(87) Internationale Veröffentlichungsnummer: WO 2010/028915

(56) Entgegenhaltungen:
- WO-A1-03/026936
- DE-A1- 4 108 466
- DE-A1-102004 046 626
- JP-A- 2004 236 489

## Beschreibung

Die Erfindung betrifft ein Verfahren sowie eine Vorrichtung zur Steuerung eines Elektromotors, bei welchem einem Elektromotor eine Betriebsspannung und ein Betriebsstrom zugeführt und durch die Regelung der Betriebsspannung oder des Betriebsstroms das im Betrieb abgegebene Drehmoment auf einen vorgebbaren Maximalwert begrenzt wird.

Verfahren der eingangs genannten Art werden beispielsweise eingesetzt, um mechanische Komponenten, welche von dem Elektromotor angetrieben werden, vor Schäden durch Überlastung zu schützen. Die mechanischen Komponenten können dabei beispielsweise eine Scheibenwischvorrichtung eines Kraftfahrzeuges umfassen oder eine Komfortfunktion wie beispielsweise einen Fensterheber oder ein Schiebedach.

Aus der DE 100 31 925 A1 ist bekannt, dass maximale Drehmoment eines Elektromotors nach dessen Fertigung zu bestimmen und in einem Parameter der Motorsteuerung abzulegen. Dadurch können Exemplarstreuungen ausgeglichen werden, indem Elektromotoren mit einem besonders hohen maximalen Drehmoment auf einen vorgebbaren Maximalwert begrenzt werden.

Aus der DE 101 44 985 A1 ist bekannt, das von einem Elektromotor abgegebene Drehmoment während des Betriebes unter Berücksichtigung des Übersetzungsverhältnisses einzustellen. Dadurch kann die Beschädigung nachfolgender Komponenten durch große Kräfte vermieden werden, welche auftreten, wenn ein kleines Übersetzungsverhältnis und ein großes Drehmoment des Elektromotors zusammentreffen.

Die Offenlegungsschrift JP 2004-236489 A zeigt ein Verfahren zur Steuerung eines Motors, wobei ein Antriebsdrehmoment des Motors unabhängig von einer Temperatur einer Motorspule konstant gehalten wird.

Die Offenlegungsschrift DE 10 2004 046 626 A1 zeigt eine Motorsteuerung zur Steuerung eines Elektromotors.

Die Offenlegungsschrift DE 41 08 466 A1 zeigt eine Steuervorrichtung für einen Induktionsmotor.

Die Offenlegungsschrift WO 03/026936 A1 zeigt ein Verfahren zur Steuerung einer Scheibenwischvorrichtung.

Alle bekannten Verfahren aus dem Stand der Technik haben jedoch gemeinsam, dass das maximal auftretende Drehmoment bei einer festgelegten Umgebungstemperatur bestimmt wird. Die Änderung des maximalen Drehmomentes mit der Umgebungstemperatur des Elektromotors berücksichtigen diese Verfahren nicht. Insbesondere bei permanent erregten Elektromotoren steigt jedoch das maximale Drehmoment mit sinkender Temperatur an. Dadurch kann es auch bei Einsatz der bekannten Begrenzungsverfahren bei niedrigen Temperaturen zu einer mechanischen Überlastung nachfolgender Komponenten kommen, welche dadurch beispielsweise brechen oder plastisch verformt werden.

Der Erfindung liegt daher die Aufgabe zugrunde, die Überlastung mechanischer Komponenten bei deren Antrieb durch einen Elektromotor zu vermeiden.

Die Aufgabe wird erfindungsgemäß gelöst durch ein Verfahren gemäss Anspruch 1.

Weiterhin besteht die Lösung der Aufgabe in einer Vorrichtung gemäss Anspruch 5.

Die Erfindung löst das Problem, dass das maximale Drehmoment eines permanent erregten Elektromotors mit abnehmender Temperatur zunimmt. Erfindungsgemäß wird die Betriebsspannung und/oder der Betriebsstrom so kontrolliert, dass ein vorgebbares maximales Drehmoment nicht überschritten wird. Erfindungsgemäß wird hierzu vorgeschlagen, nicht das Ausgangsdrehmoment des Elektromotors unmittelbar zu messen, sondern die Temperatur des Elektromotors und/oder die Temperatur der Einbauumgebung des Elektromotors zu bestimmen und die vom Elektromotor aufgenommene elektrische Leistung in Abhängigkeit der gemessenen oder berechneten Temperatur so zu begrenzen, dass der Drehmomentanstieg mit abnehmender Temperatur kompensiert wird.

Dem Fachmann ist dabei selbstverständlich geläufig, dass aufgrund der Messgenauigkeit der Temperatur, aufgrund von Nicht-Linearitäten im Drehmomentanstieg und aufgrund von Regelabweichungen der Elektromotor weiterhin einen geringen Drehmomentanstieg oder auch einen Drehmomentabfall bei sinkender Temperatur zeigen kann. Ein eventuell verbleibender Drehmomentanstieg ist jedoch in jedem Fall geringer als bei einem Elektromotor gemäß dem Stand der Technik. Die Erfindung lehrt nicht die Erzeugung eines absolut geraden Drehmomentverlaufs als Lösungsprinzip.

Als eine, die Elektromotortemperatur kennzeichnende Messgröße kann beispielsweise das Ausgangssignal eines Temperatursensors verwendet werden, welcher innerhalb des Gehäuses des Elektromotors angeordnet ist. In einer weiteren Ausführungsform der Erfindung kann vorgesehen sein, den Widerstand der Wicklungen auszulesen und aus der Temperaturabhängigkeit dieses Widerstandes die Temperatur des Elektromotors zu bestimmen. Weiterhin kann vorgesehen sein, den Betriebsstrom und die Betriebsspannung des Elektromotors zu protokollieren und aus der aufgenommenen elektrischen Leistung, dem Wirkungsgrad und der Umgebungstemperatur mittels einer Energiebilanz die Temperatur des Elektromotors zu modellieren. Schließlich kann vorgesehen sein, die Temperatur des Elektromotors aus einer Umgebungstemperatur zu modellieren. Die Umgebungstemperatur kann in einem Kraftfahrzeug beispielsweise aus der Außentemperatur, der Motorraumtemperatur, der Öltemperatur der Brennkraftmaschine oder deren Kühlmitteltemperatur bestimmt werden.

Um die Zuverlässigkeit zu erhöhen, ist erfindungsgemäss vorgesehen, die Drehmomentreduzierung des Elektromotors unter vorgebbaren Betriebsbedingungen vorübergehend auszuschalten. Damit wird vermieden, dass bei einer gestörten Bestimmung der temperaturkennzeichnenden Messgröße und gleichzeitig hohem Drehmomentbedarf das abgegebene Drehmoment des Elektromotors reduziert wird. Ein solcher Betriebszustand kann beispielsweise in einem Kraftfahrzeug oberhalb einer vorgebbaren Geschwindigkeit vorliegen.

Weiterhin kann vorgesehen sein, bei Störungen der Aufnahme der temperaturkennzeichnenden Messgröße das abgegebene Motordrehmoment pauschal um einen vorgebbaren Wert zu reduzieren. Dieser Wert kann beispielsweise etwa 5% bis etwa 20%, insbesondere etwa 10% betragen.

Nachfolgend soll die Erfindung anhand von Ausführungsbeispielen und Figuren ohne Beschränkung des allgemeinen Erfindungsgedankens näher erläutert werden.
Figur 1 zeigt den Drehmomentverlauf eines Elektromotors gegen die Drehzahl für verschiedene Temperaturen gemäß dem Stand der Technik.
Figur 2 zeigt den Drehmomentverlauf eines Elektromotors gegen die Drehzahl für verschiedene Temperaturen gemäß der Erfindung
Figur 3 zeigt ein Blockschaltbild eines Elektromotors mit zugehöriger Ansteuerelektronik.
Figur 4 zeigt ein weiteres Blockschaltbild eines Elektromotors mit zugehöriger Ansteuerelektronik und dessen Einbindung in ein Bordnetz.
Figur 5 zeigt ein Blockschaltbild eines Elektromotors, dessen Ansteuerelektronik und die Einbindung in ein Bordnetz eines Fahrzeuges gemäß eines weiteren Ausführungsbeispiels.

Nachfolgend wird die Erfindung anhand einer Scheiben¬wisch¬vorrichtung eines Fahrzeuges als Ausführungsbeispiel erläutert. Dem Fachmann ist dabei jedoch selbstverständlich geläufig, dass die offenbarten Prinzipien auch in jedem anderen Gebiet der Technik anwendbar sind, in dem eine mechanische Vorrichtung mittels eines permanent erregten Elektromotors angetrieben wird.

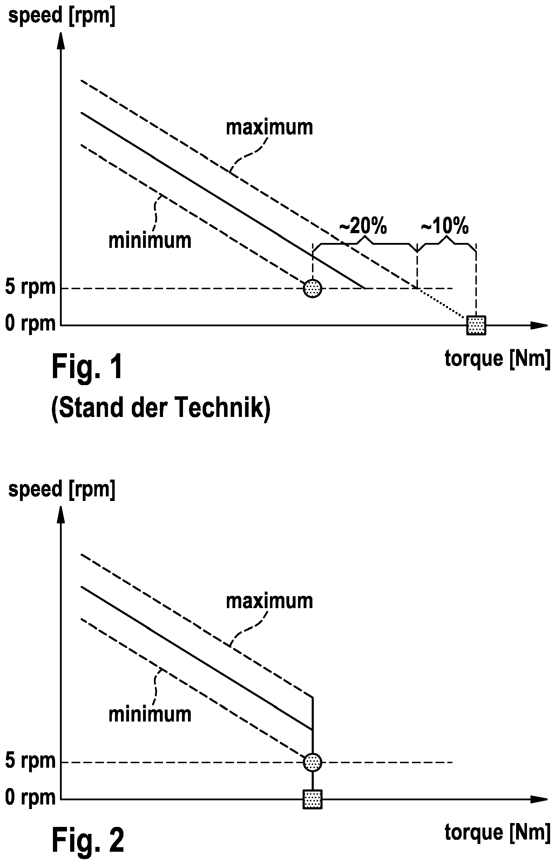

Figur 1 zeigt das Drehmoment eines Elektromotors auf der Abszisse und die zugehörige Drehgeschwindigkeit des Motors auf der Ordinate. Die durchgezogene Linie zeigt dabei den typischen Verlauf für einen permanent erregten Elektromotor von der minimal spezifizierten Drehzahl, im Beispiel 5 Umdrehungen pro Minute (rpm), bis zur Maximaldrehzahl. Im Ausführungsbeispiel gemäß Figur 1 nimmt das Drehmoment mit höherer Drehzahl linear ab.

Zusätzlich ist das vom Motor abgegebene Drehmoment noch von der Temperatur des Motors abhängig. Der durchgezogene Kurvenverlauf gemäß Figur 1 gilt dabei für eine Nenntemperatur von +20°C eine Erhöhung der Temperatur, beispielsweise auf +40°C oder +50°C führt zu einer Abnahme des Drehmomentes, wie die strichliert dargestellte und mit "Minimum" beschriftete Kurve zeigt. Bei einer Verringerung der Temperatur beispielsweise auf -30°C bis -40°C, ergibt sich der mit "Maximum" bezeichnete Kurvenverlauf.

Die Zunahme des Drehmomentes bei abnehmender Drehgeschwindigkeit setzt sich auch unterhalb der Minimaldrehzahl, im Beispiel nach Figur 1 5 rpm, fort. Daher wird das maximale Drehmoment bei einer Drehzahl von 0 rpm, d.h. im Stillstand des Motors und der kleinsten möglichen Einsatztemperatur erreicht. Dieser Betriebspunkt ist in Figur 1 mit einem Quadrat markiert.

Gleichzeitig muss ein Elektromotor zum Antrieb einer mechanischen Komponente so dimensioniert sein, dass das niedrigste Maximalmoment zum Antrieb der Komponente ausreicht. Dieses stellt sich bei der minimalen spezifizierten Drehgeschwindigkeit und der höchsten Einsatztemperatur ein. Dieser Betriebspunkt ist in Figur 1 mit einem Kreis markiert.

Aus Figur 1 ist ersichtlich, dass das maximale Drehmoment bei minimaler Drehzahl und höchster Temperatur (Kreis) und bei Blockierung des Motors und niedrigster Temperatur (Quadrat) um etwa 30 % variiert. Für einen konkreten Einsatzzweck muss der Elektromotor somit so ausgewählt werden, dass die angetriebene mechanische Komponente am mit einem Kreis markierten Betriebspunkt zuverlässig angetrieben wird. Gleichzeitig muss die mechanische Komponente so dimensioniert werden, dass diese am mit einem Quadrat markierten Betriebspunkt nicht zerstört wird. Somit ist die mechanische Komponente für die meisten Betriebszustände überdimensioniert und daher unverhältnismäßig schwer und teuer.

Im Falle einer Scheiben¬wisch¬vorrichtung entspricht der Betriebspunkt mit minimaler Drehzahl und minimalen Drehmoment beispielsweise dem Betrieb bei hoher Temperatur und hoher Geschwindigkeit, welche eine hohe Windlast bewirkt. Das maximale Drehmoment tritt beispielsweise dann auf, wenn der Wischermotor nach längerer Standzeit des Fahrzeuges bei kühler Witterung ausgekühlt ist und die Scheiben¬wisch¬vorrichtung durch Anfrieren oder Schneelast blockiert ist.

Figur 2 zeigt ein identisches Diagramm wie Figur 1, wobei der Elektromotor jedoch mit dem erfindungsgemäß vorgeschlagenen Verfahren angesteuert wird.

Bei maximaler spezifizierter Einsatztemperatur und einer Drehzahl oberhalb der spezifizierten Mindestdrehzahl erfährt der Motor keinerlei Drosselung. Das abgegebene Drehmoment folgt mit der Drehzahl dem Verlauf der mit "Minimum" gekennzeichneten Kurve. Bei maximaler Einsatztemperatur und minimaler Drehzahl (5 rpm) erreicht der Elektromotor sein maximales Drehmoment (Kreis). Sinkt nun die Drehzahl unterhalb der spezifizierten Mindestdrehzahl ab, so wird der sich daraus ergebende Drehmomentanstieg durch eine Reduktion der elektrischen Leistungszufuhr kompensiert, sodass das Drehmoment nicht weiter ansteigt (Quadrat). Sofern der Elektromotor bei einer niedrigeren Temperatur betrieben wird, so folgt der Drehmomentverlauf beispielsweise der durchgezogenen Linie in Figur 2 oder bei der niedrigsten möglichen Einsatztemperatur der mit "Maximum" gekennzeichneten Kurve. In diesem Fall setzt die Begrenzung der aufgenommenen elektrischen Leistung nicht erst bei der minimalen spezifizierten Drehzahl ein, sondern bereits zu einem früheren Zeitpunkt, um den Anstieg des Drehmomentes über den Maximalwert bei hoher Betriebstemperatur zu vermeiden. Durch diese Begrenzung des maximalen Drehmomentes wird eine Überlastung des Wischergestänges verhindert. Dieses kann daher leichter und kostengünstiger konstruiert werden.

Selbstverständlich ist der Kurvenverlauf gemäß Figur 2 nur als beispielhaft anzusehen. In weiteren Ausführungsformen der Erfindung kann beispielsweise vorgesehen sein, einen Drehmomentanstieg bei sinkender Temperatur bis zur Minimaldrehzahl hinzunehmen und erst bei Absinken der Drehzahl unter die Minimaldrehzahl das Drehmoment zu begrenzen.

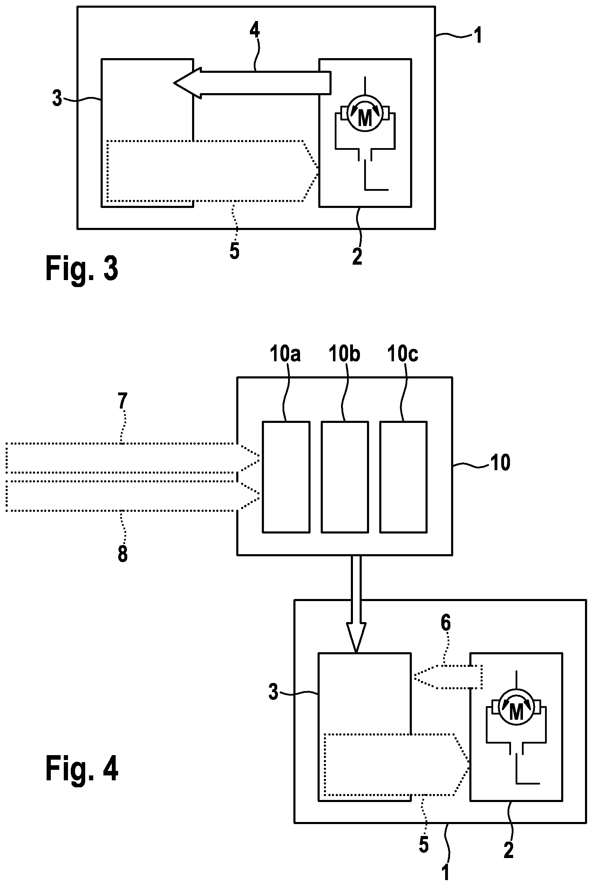

Figur 3 zeigt ein Blockschaltbild eines Elektromotors 1. Der Elektromotor 1 umfasst die sich bekannten Teile 2 eines permanent erregen Elektromotors, bestehend aus Rotor, Stator, Kommutator und Anschlussfahnen. Diese Teile sind dem Fachmann geläufig und daher in Figur 3 nicht detailliert dargestellt.

Weiterhin umfasst der Elektromotor 1 eine Steuerelektronik 3. Die Steuerelektronik 3 ist dazu eingerichtet, den elektromechanischen Teilen 2 einen Betriebsstrom und eine Betriebsspannung 5 zur Verfügung zu stellen. Auf diese Weise kann durch Regelung der den elektromechanischen Teilen 2 zugeführten elektrischen Leistung das von den elektromechanischen Teilen 2 abgegebene Drehmoment kontrolliert werden.

Die Steuerelektronik erhält ein Eingangssignal 4, welches von einem Temperatursensor erzeugt wird, welcher die Temperatur des Motors 2 bestimmt. Der Temperatursensor 4 kann dabei innerhalb des Motorgehäuses 2 angeordnet sein und so unmittelbar die Temperatur im Bereich der Motorwicklungen messen.

In Abhängigkeit der Messwerte des Temperatursensors 4 begrenzt die Steuerelektronik 3 die elektrische Leistung 5 und damit das abgegebene Drehmoment der elektromechanischen Teile 2.

Bevorzugt ist die Steuerelektronik 3 zusammen mit dem elektromechanischen Teilen 2 in einem Gehäuse 1 integriert. In diesem Fall steht dem Benutzer ein kompakter Elektromotor 1 zur Verfügung, dessen maximales Drehmoment unabhängig von der Temperatur nahezu konstant bleibt.

Figur 4 zeigt einen Elektromotor 1 und dessen Integration in ein Bordnetz 10, welches beispielsweise Bestandteil eines Kraftfahrzeuges ist. Der Elektromotor 1 weist, wie in Zusammenhang mit Figur 3 erläutert, Teile 2 eines permanent erregten Elektromotors auf, welcher zusammen mit der Steuerelektronik 3 in einem Gehäuse zusammengefasst ist.

Die Steuerelektronik 3 beeinflusst den Versorgungsstrom und/oder die Versorgungsspannung und kontrolliert damit die elektrische Leistung 5, welche den elektromechanischen Teilen 2 zugeführt wird.

Anstelle eines Temperatursensors 4 wird die Temperatur im Ausführungsbeispiel nach Figur 2 aus einer Energiebilanz bestimmt. Dazu wird der Steuerelektronik 3 über den Pfad 6 ein Messsignal der aufgenommenen elektrischen Leistung des Motors 2 zugeführt. Mit Hilfe des Wirkungsgrades, welcher beispielsweise in einer Speichervorrichtung der Steuerelektronik 3 abgelegt sein kann, wird von der Steuerelektronik 3 die thermische Last der elektromechanischen Teile 2 bestimmt. Diese thermische Last wird Eingangsgröße einer thermischen Energiebilanz, aus welcher die sich einstellende Temperatur der Teile 2 berechnet werden kann.

Der Elektromotor 1 ist in ein Bordnetz 10 eines Fahrzeuges eingebunden. Das Bordnetz 10 untergliedert sich in mehrere Unternetze 10A, 10B, 10C, ..., welche unterschiedliche Aufgaben wahrnehmen. Beispielsweise kann der Motor 1 aus dem Bordnetz 10 mit elektrischer Energie versorgt werden.

Weiterhin weist das Fahrzeug zwei Temperatursensoren 7 und 8 auf. Die Temperatursensoren 7 und 8 sind dabei mit dem Teilnetz 10A des Bordnetzes 10 verbunden. Der Temperatursensor 7 ist beispielsweise dazu vorgesehen, die Außentemperatur in der Umgebung des Fahrzeuges zu bestimmen. Weiterhin ist ein Temperatursensor 8 vorgesehen, welcher die Kühlmitteltemperatur der Brennkraftmaschine des Kraftfahrzeuges ermittelt. Aus beiden Temperaturen kann die Umgebungstemperatur am Ort des Elektromotors 1 berechnet werden, um so den thermischen Energieverlust des Motors 1 und daraus die Temperatur der Teile 2 ermitteln zu können.

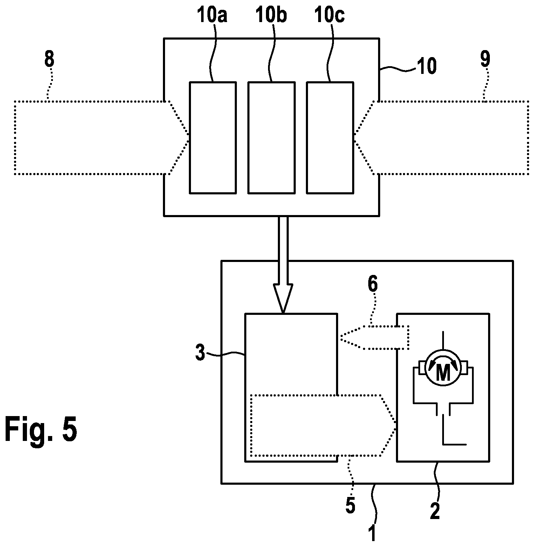

Figur 5 zeigt denselben Aufbau eines Motors 1 mit einer Steuerelektronik 3. Auch im Ausführungsbeispiel gemäß Figur 5 ist der Motor 1 in ein Bordnetz 10 integriert, wie dies im Zusammenhang mit Figur 4 erläutert wurde. Ein Temperatursensor 8 übermittelt über das Teilnetz 10A des Bordnetzes 10 eine Information zur Umgebungstemperatur an die Steuerelektronik 3. Diese kann somit aus dem Messwert 6 der aufgenommenen elektrischen Leistung in einer Energiebilanz die Temperatur des Motors 2 ermitteln, wie bereits vorstehend erläutert.

Im Ausführungsbeispiel gemäß Figur 5 ist weiterhin eine Geschwindigkeitsinformation 9 vorgesehen, welche der Steuerelektronik 3 über das Teilnetz 10 C des Bordnetzes 10 zugeführt wird.

Die Geschwindigkeitsinformation 9 kann von der Steuerelektronik 3 dazu verwendet werden, die Drehmomentbegrenzung des Elektromotors 2 durch Begrenzung der zugeführten elektrischen Leistung 5 vorübergehend auszusetzen, wenn das Fahrzeug mit einer Geschwindigkeit oberhalb eines vorgebbaren Grenzwertes bewegt wird. Der Grenzwert kann beispielsweise bei etwa 100 km/h, bei etwa 120 km/h oder bei etwa 140 km/h liegen. Der Grenzwertes wird vom Fachmann so ausgewählt, dass bei einer solchen Fahrgeschwindigkeit eine Blockierung der Scheiben¬wisch¬vorrichtung durch Schneelast oder durch Festfrieren überlicherweise nicht mehr erfolgt. Gleichzeitig ist das benötigte Drehmoment aufgrund der Windlast erhöht. Eine ungewollte Drehmomentreduktion aufgrund einer Fehlfunktion würde sich daher negativ auf die Wischgeschwindigkeit und damit auf die Verkehrsicherheit auswirken.

Bei Unterschreiten des Schwellenwertes wird die Drehmomentbegrenzung des Elektromotors 2 durch die Steuerelektronik 3 wieder eingeschaltet. Um häufige Schaltvorgänge zu vermeiden, kann hierzu ein weiterer Grenzwert vorgesehen sein, welcher vom ersten Grenzwert verschieden ist.

Dem Fachmann ist selbstverständlich geläufig, dass die Erfindung nicht auf die dargestellten Ausführungsbeispiele beschränkt ist. Die vorstehende Beschreibung ist daher nicht als beschränkend, sondern als erläuternd anzusehen.

## Patentansprüche

1. Verfahren zur Steuerung eines Elektromotors (2), bei welchem einem Elektromotor (2) eine Betriebsspannung und ein Betriebsstrom zugeführt und zumindest eine die Elektromotortemperatur kennzeichnende Messgröße (4, 6, 7, 8) aufgenommen wird, wobei das vom Elektromotor (2) im Betrieb maximal abgegebene Drehmoment unabhängig von der Temperatur des Elektromotors (2) nahezu konstant gehalten wird, und das vom Elektromotor (2) im Betrieb maximal abgegebene Drehmoment in vorgebbaren Betriebssituationen nicht begrenzt wird.

2. Verfahren nach Anspruch 1, **dadurch gekennzeichnet, dass** die die Elektromotortemperatur kennzeichnende Messgröße (4, 6, 7, 8) ausgewählt ist aus einer Außentemperatur (7) und/oder einer Kühlwassertemperatur (8) und/oder einer Leistungsaufnahme (6) des Elektromotors.

3. Verfahren nach einem der Ansprüche 1 oder 2, **dadurch gekennzeichnet, dass** das maximal abgegebene Drehmoment um etwa 5% bis etwa 20% reduziert wird, wenn die die Elektromotortemperatur kennzeichnende Messgröße (4, 6, 7, 8) nicht erfasst werden konnte.

4. Verfahren nach einem der Ansprüche 1 bis 3, **dadurch gekennzeichnet, dass** der Elektromotor (2) zum Antrieb einer Scheibenwischvorrichtung vorgesehen ist.

5. Vorrichtung (3) zur Steuerung eines Elektromotors, welche dazu eingerichtet ist, einem Elektromotor (2) eine Betriebsspannung und einen Betriebsstrom zuzuführen, wobei die Vorrichtung (3) eine Einrichtung zur Erfassung zumindest einer die Elektromotortemperatur kennzeichnenden Messgröße (4, 6, 7, 8) enthält und eine Begrenzungseinrichtung (5), mit welcher das vom Elektromotor (2) im Betrieb maximal abgegebene Drehmoment unabhängig von der Temperatur des Elektromotors (2) nahezu konstant gehalten werden kann, wobei die Begrenzungseinrichtung (5) unter vorgebbaren Betriebsbedingungen abschaltbar ist.

6. Vorrichtung nach Anspruch 5, **dadurch gekennzeichnet, dass** die Einrichtung zur Erfassung zumindest einer die Elektromotortemperatur kennzeichnenden Messgröße (4, 6, 7, 8) mindestens einen Temperatursensor (4, 7, 8) und/oder eine Einrichtung zur Erfassung der vom Elektromotor aufgenommenen elektrischen Leistung (6) umfasst.

7. Scheibenwischvorrichtung **gekennzeichnet durch** eine Vorrichtung nach einem der Ansprüche 5 bis 6.

8. Computerprogramm **gekennzeichnet durch** Programmcode, der auf einem maschinenlesbaren Träger gespeichert ist, zur Durchführung des Verfahrens nach einem der Ansprüche 1 bis 4, wenn das Computerprogramm auf einem Computer ausgeführt wird.

## Claims

1. A method for controlling an electric motor (2), in which method an operating voltage and an operating current are supplied to an electric motor (2) and at least one measurement variable (4, 6, 7, 8) which characterizes the temperature of the electric motor is recorded, with the maximum torque output by the electric motor (2) during operation being kept virtually constant, irrespective of the temperature of the electric motor (2) and the maximum torque output by the electric motor (2) during operation not being limited in predefinable operating situations.

2. Method according to Claim 1, **characterized in that** the measurement variable (4, 6, 7, 8) which characterizes the temperature of the electric motor is selected from amongst an external temperature (7) and/or a cooling-water temperature (8) and/or a power consumption (6) of the electric motor.

3. Method according to either of Claims 1 and 2, **characterized in that** the maximum torque output is reduced by approximately 5% to approximately 20% if it was not possible to record the measurement variable (4, 6, 7, 8) which characterizes the temperature of the electric motor.

4. Method according to one of Claims 1 to 3, **characterized in that** the electric motor (2) is provided to drive a windshield wiping device.

5. Device (3) for controlling an electric motor, which device is designed to supply an operating voltage and an operating current to an electric motor (2), with the device (3) containing an arrangement for detecting at least one measurement variable (4, 6, 7, 8) which characterizes the temperature of the electric motor, and containing a limiting arrangement (5) by way of which the maximum torque output by the electric motor (2) during operation can be kept virtually constant, irrespective of the temperature of the electric motor (2), wherein the limiting arrangement (5) can be switched off under predefinable operating conditions.

6. Device according to Claim 5, **characterized in that** the arrangement for detecting at least one measurement variable (4, 6, 7, 8) which characterizes the temperature of the electric motor comprises at least one temperature sensor (4, 7, 8) and/or an arrangement for detecting the electrical power (6) consumed by the electric motor.

7. Windshield wiping device **characterized by** a device according to one of Claims 5 to 6.

8. Computer program, **characterized by** program code which is stored in a machine-readable storage medium, for carrying out the method according to one of Claims 1 to 4 when the computer program is run on a computer.

## Revendications

1. Procédé de commande d'un moteur électrique (2), selon lequel une tension de service et un courant de service sont acheminés à un moteur électrique (2) et au moins une grandeur de mesure (4, 6, 7, 8) qui caractérise la température de moteur électrique est relevée, le couple maximal délivré en fonctionnement par le moteur électrique (2) étant maintenu quasiment constant indépendamment de la température du moteur électrique (2), et le couple maximal délivré en fonctionnement par le moteur électrique (2) n'étant pas limité dans des situations de fonctionnement pouvant être prédéfinies.

2. Procédé selon la revendication 1, **caractérisé en ce que** la grandeur de mesure (4, 6, 7, 8) qui caractérise la température de moteur électrique est choisie parmi une température extérieure (7) et/ou une température d'eau de refroidissement (8) et/un une puissance consommée (6) du moteur électrique.

3. Procédé selon l'une des revendications 1 ou 2, **caractérisé en ce que** le couple maximal délivré est réduit d'environ 5 % à environ 20 % lorsque la grandeur de mesure (4, 6, 7, 8) qui caractérise la température de moteur électrique n'a pas pu être acquise.

4. Procédé selon l'une des revendications 1 à 3, **caractérisé en ce que** le moteur électrique (2) est conçu pour l'entraînement d'un arrangement essuie-glace.

5. Arrangement (3) de commande d'un moteur électrique, lequel est conçu pour acheminer une tension de service et un courant de service à un moteur électrique (2), l'arrangement (3) contenant un dispositif destiné à acquérir au moins une grandeur de mesure (4, 6, 7, 8) qui caractérise la température de moteur électrique et un dispositif de limitation (5) avec lequel le couple maximal délivré en fonctionnement par le moteur électrique (2) peut être maintenu quasiment constant indépendamment de la température du moteur électrique (2), le dispositif de limitation (5) pouvant être mis hors circuit dans des conditions de fonctionnement pouvant être prédéfinies.

6. Arrangement selon la revendication 5, **caractérisé en ce que** le dispositif destiné à acquérir au moins une grandeur de mesure (4, 6, 7, 8) qui caractérise la température de moteur électrique comporte au moins une sonde de température (4, 7, 8) et/ou un dispositif destiné à détecter la puissance électrique (6) absorbée par le moteur électrique.

7. Arrangement essuie-glace, **caractérisé par** un arrangement selon l'une des revendications 5 à 6.

8. Programme informatique, **caractérisé par** un code de programme qui est enregistré sur un support lisible par machine, destiné à mettre en oeuvre le procédé selon l'une des revendications 1 à 4 lorsque le programme informatique est exécuté sur un ordinateur.
